# EUROPEAN PATENT APPLICATION

(11) **EP 3 388 723 A1**
(43) Date of publication of application: **17.10.2018**
(21) Application number: 18166870.8
(22) Date of filing: 11.04.2018
(51) Int. Cl.: F16L 3/26, H02G 3/06, H02G 9/04, A01G 25/00

(54) **CARRIAGEABLE DUCT**

(30) Priority: 11.04.2017 IT 201700040180
(71) Applicant: Pirazzoli, Oscar, 48012 Bagnacavallo (RA) (IT)
(72) Inventor: Pirazzoli, Oscar, 48012 Bagnacavallo (RA) (IT)
(74) Representative: Negrini, Elena

(57) **Abstract**

A carriageable duct (1) being part of a sealed pipeline (2), consisting of pipes (3) mutually fixed in correspondence with a coupling condition (A), has at one end a first coupling means (4) and at the remaining end a first locking means (5).

In correspondence with a sealing condition (T), the first coupling means (4) is tightly locked with a second locking means (6) and the first locking means (5) is tightly fixed to a second coupling means (7) respectively of an adjacent pipe (3) connected to each free end of the carriageable duct(1).

The carriageable duct (1) has a central portion (8) which is reinforced, lowered, indeformable to trampling and it is connected at one end to a first portion (14), to which the first coupling means (4) is connected, and at the remaining end is connected to a second portion (18), with the first locking means (5) connected thereto.

## Description

The present invention relates to the technical field concerning the pipelines for the remote transport of fluids or solid materials, and in particular refers to a carriageable duct.
The pipelines for the transport of fluid materials comprise a series of pipes that are mutually hooked in addition to some special pipes, among which those adapted for the passage of vehicles.

Known devices for the protection of drivable pipelines, for example for transporting irrigation water or food products, such as milk, oil, wine and beer, in production and storage plants, generally have a superstructure which surrounds or at least covers the portions of carriageable duct affected by the passage of vehicles.

For example, the Chinese utility model no. CN203846365U discloses a protection structure for an irrigation duct, characterized by a support body lying on the road surface where the irrigation duct is laid, and by a closure and protection superstructure for the duct, so allowing the passage of vehicles without crushing the carriageable duct.

The main disadvantage of known devices consists in transporting two distinct elements such as the carriageable duct and the protection superstructure of at least the carriageable duct or of a portion of the irrigation duct.

Another disadvantage of known devices lies in the complexity of installing at least these two elements, first having to place one and then the other separately and the reverse process to uninstall the carriageable duct.

Further disadvantage is that it is always necessary to use a carriageable duct with the same dimensions since it must be contained inside the relative superstructure. In other words, changing the duct sizes, it requires changing the superstructure and vice versa.

The main object of the present invention is to propose a carriageable duct for fluid-tight transport constituted by a single element which is indeformable to the trampling of any vehicle.

Another object is to propose an easily installable and transportable drive duct.

The characteristics of the present invention are underlined in the following with reference to the attached drawings, in which:
- figure 1 shows a top view of the carriageable duct object of the present invention;
- figure 2 shows a side view of the duct of figure 1;
- figure 3 shows a sectional view according to the plane III - III of figure 2.
- figure 4 shows a section view according to the plane IV - IV of figure 1;
- figure 5 shows a side view of a portion of the pipeline with the duct of figure 2 partially connected to other pipes of the same pipeline;
- figure 6 shows a use variation of the carriageable duct of figure 5;
- figure 7 shows a first variant of the duct of figure 1;
- figure 8 shows a sectional view according to the plane VIII - VIII of duct of figure 7;
- figure 9 shows a second variant of the duct illustrated in figure 2.

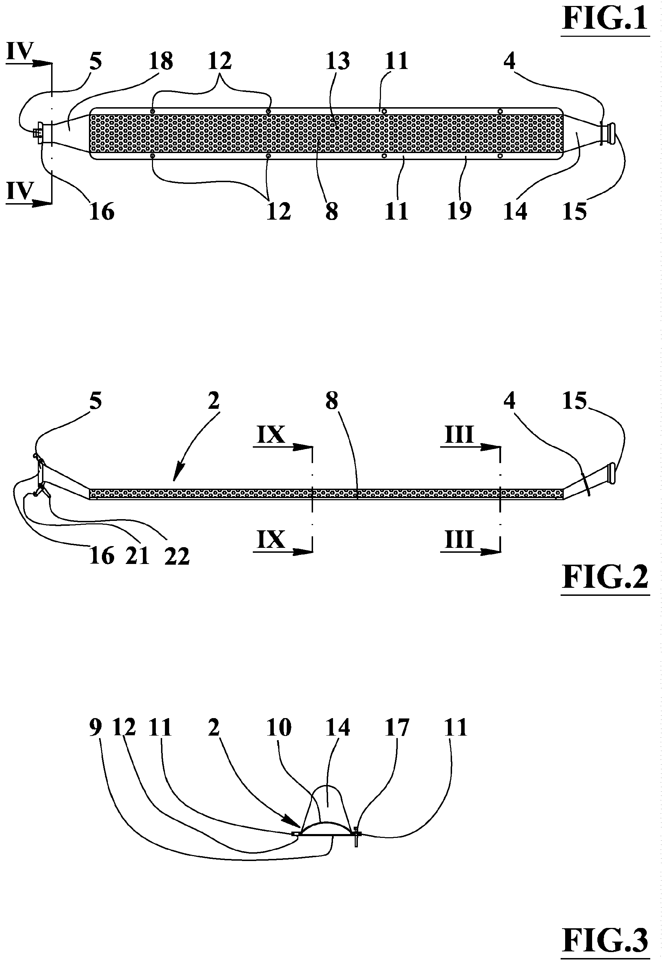

With reference to figures 1-6, numeral 1 indicates the carriageable duct object of the present invention which is part of a pipeline 2, also constituted by pipes 3 mutually connected in correspondence with a coupling condition A in which the pipeline 2 is used for handling and transporting of fluids, of food liquids, such as water, milk, oil, wine, beer, fruit juices, of non-food liquids, such as petroleum, chemical, gas or powder-type products.

Cables and in particular electric cables can also be housed within this pipeline 2.

The carriageable duct 1 has a central portion 8 lowered, elongated, reinforced, indeformable and designed to be walked on and to support the weight of any vehicle or load.

One end of the carriageable duct 1 has a first coupling means 4, while the remaining end has a first locking means 5 respectively for sealing engagement, in correspondence with a sealing condition T, with a second locking means 6 of one pipe 3 and a second coupling means 7 of one pipe 3, with each of said last two pipes connected to each free end of the carriageable duct 1.

The central portion 8 is joined, for example by welding, at one end with a first portion 14 of a tube, which supports the first coupling means 4, and a second portion 18 of a tube is connected to the remaining end, for example by welding, which supports the first locking means 5.

The central portion 8 is essentially constituted by a base 9 for supporting the carriageable duct 1 on the ground. This base 9 is fixed, for example by welding or folding, to a wall 10, shaped as a dome, so delimiting an axially developing cavity for housing materials to be transported through the carriageable duct 1 and the linked pipes 3, which together constitute the entire pipeline 2 in the coupling condition A.

The first portion 14 and the second portion 18 are raised from the base 9, i.e. they are inclined with respect to the longitudinal axis of the central portion 8, and are shaped in such a way as to keep the flow rate constant during the passage of fluid or of pulverulent material inside the duct 1, or to allow also an easy passage of cables avoiding obstructing or obstinacy.

The particular shape of the carriageable duct 1 defines a good trace and grip on the ground and a reduced height so allowing heavy loads and any vehicles to easily pass onto the duct 1 while avoiding crushing of the same.

The base 9 and the dome 10 are connected by axial development gripping means 11 for increasing the grip on the ground of the carriageable duct 1. In the preferred embodiment, the gripping means 11 has lateral wings 19 provided with through holes 12 crossed by fixing means 17, for example screws or threaded bars, to constrain the carriageable duct 1 to the ground, so as to prevent it from being moved during trampling and the passage, for example, of a vehicle.

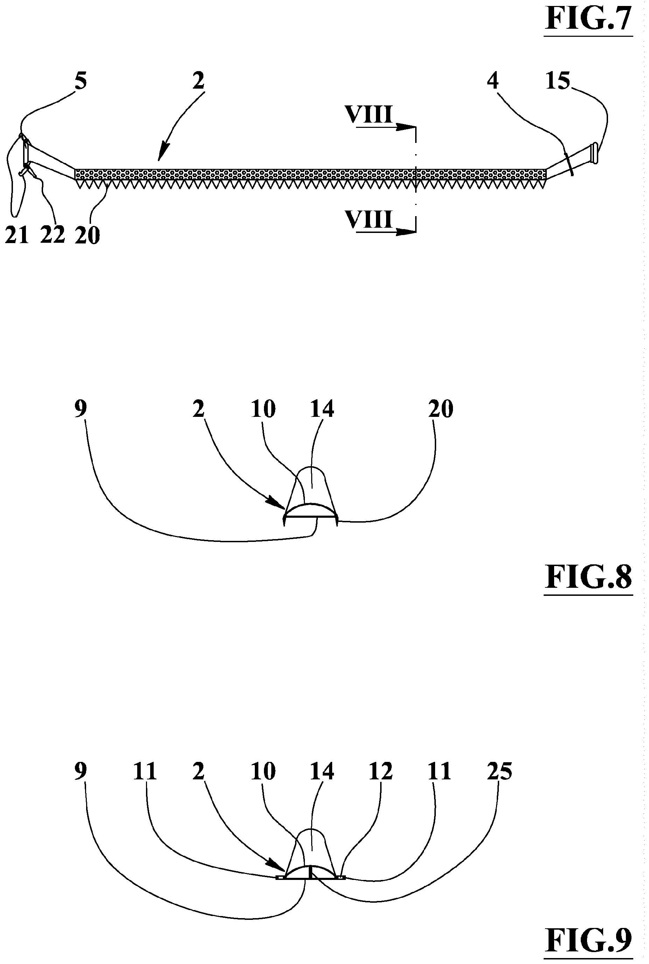

Figures 7 and 8 show a variant of the gripping means 11, in which these are constituted by teeth 20, fixed perpendicularly to the base 9 and facing away from the dome 10, fit to stick in the ground so as to avoid accidental displacement of the carriageable duct 1 when a load passes thereon.

The end of duct 1, i.e. the free end of the first portion 14 near the first coupling means 4, is shaped as a hemisphere 15, while the remaining end of the duct 1, i.e. the free end of the second portion 18, is shaped as acetabulum 16, which is near the first locking means 5.

The central portion 8 has an anti-slip outer surface 13 suitable for preventing slipping or sliding during the passage of a load or vehicle.

The duct 1, like the pipes 3 and therefore the whole pipeline 2, is made of ferrous material, such as steel or stainless steel or aluminum or ferrous material internally coated with plastic material, compatible with food or not products, or plastic material resistant to trampling of heavy loads or otherwise resistant to crushing.

A variant of the carriageable duct 1, shown in figure 9, provides a longitudinal reinforcement bulkhead or rib 25 fixed between the base 9 and the inner top of dome 10 for increasing the crushing resistance of the carriageable duct. It is understood that, in other variants not shown, the carriageable duct 1 has a series of longitudinal reinforcing bulkheads 25.

A further variant provides that the end of the carriageable duct 1, near the first coupling means 4 and in proximity of the first locking means 5, are flange-shaped. It is understood that any other pipeline coupling system known and not illustrated can be used in conjunction with the duct 1 object of this invention.

In correspondence of the coupling condition A and the sealing condition T, the pipeline 2 is obtained by fixing two adjacent pipes 3 by coupling a hemisphere 15 of one pipe 3 with the acetabulum 16 of the adjacent pipe 3 and the subsequent click blocking of a coupling means 4 with two hooks 21 of the locking means 5, for example by acting on a lever 22 of these latter.

Also the insertion of the carriageable duct 1 in pipeline 2, it is carried out in the same way, that is firstly by coupling the "spherical joint", i.e. inserting the hemisphere 15 into the acetabulum 16, and subsequently by fixing the first coupling means 4, at one end of duct 1, to the second locking means 6 of the upstream pipe 3 and at the remaining end of duct 1 by tightening the first locking means 5 with the second coupling means 7 of the downstream pipe 3 of carriageable duct 1.

The carriageable duct 1 is normally laid on the ground in the portion of pipeline 2 intended for carriageable passage.

The carriageable duct 1 is advantageously lockable on the ground by thrusting into the ground the fixing means 17, such as nails, screws, threaded bars, etc., previously inserted into the through holes 12 of the wings 19, so as to constrain the carriageable duct 1 to ground and to avoid movement during trampling.

Likewise, in the variant of figure 9, the teeth 20 of gripping means 11 stick into the ground when the carriageable duct 1 is inserted into the pipeline 2 in correspondence with the coupling condition A.

The inclined portions, first 14 and second 18, near the ends of the carriageable duct 1 facilitate the engagement of the latter to the pipes 2 upstream and downstream of the carriageable duct itself.

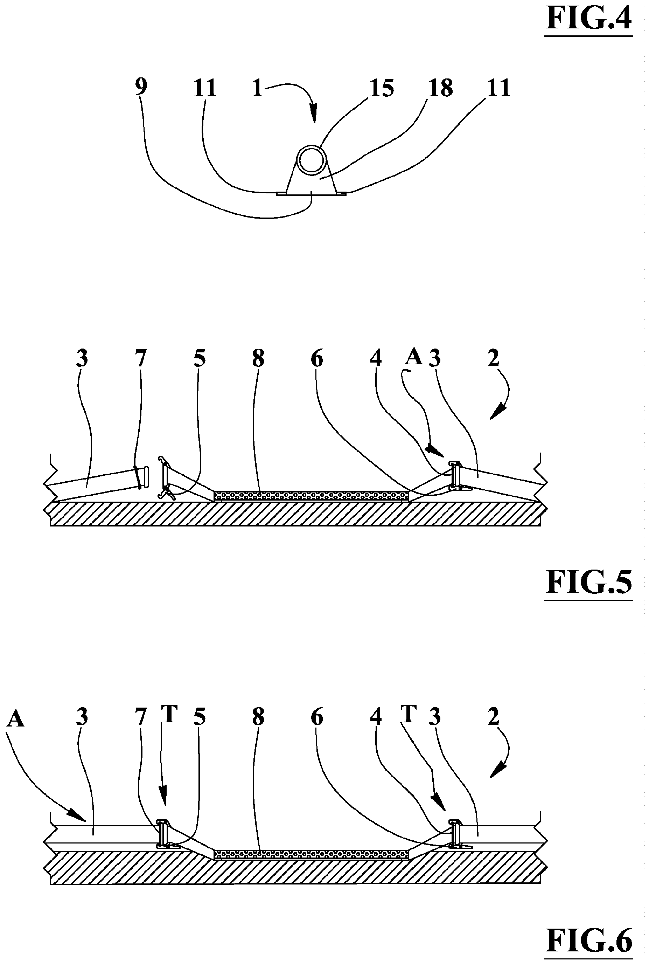

In figure 6 is illustrated the usage variant of duct 1, in which the inclined portions, first 14 and second 18, also allow partial burial of carriageable duct 1 so allowing the two free ends of duct 1 to be near the ground for easily joining the latter with pipes 3 of pipeline 2, in particular with pipes 3 lying upstream and downstream of the carriageable duct 1 at the same ground level.

The main advantage of the present invention is to provide a carriageable duct for the sealed transport, in particular of liquids, consisting of a single element which is indeformable under passage of any vehicle or load thereon.

Another advantage is to provide an easily joinable and transportable carriageable duct.

A further advantage consists in providing a pipeline that can be crossed by a heavy load in correspondence with the carriageable duct, avoiding the realization of a raised portion of the pipeline itself which normally is carried out to prevent its trampling and squashing.

## Claims

1. Carriageable duct forming part of a sealed pipeline (2) consisting of pipes (3) mutually fixed in correspondence to a coupling condition (A), and having at one end a first coupling means (4) and to the remaining one end a first locking means (5) respectively for the sealed coupling with a second locking means (6) and a second coupling means (7) respectively of the adjacent pipe (3) of the pipeline (2) constrained to each end of the carriageable duct (1) in correspondence with a sealing condition (T), the latter being **characterized by** presenting a central portion (8) which is lowered, indeformable to trampling and it is connected at one end to a first portion (14), to which the first coupling means (4) is connected, and at the remaining end is connected to a second portion (18), with the first locking means (5) connected thereto.

2. Duct according to claim 1 **characterized in that** the central portion (8) has a base (9), for lying on the ground, which is connected to a dome wall (10).

3. Duct according to claim 2 **characterized in that** the base (9) and the dome (10) are connected by gripping means (11) fit to increase the ground support surface of the carriageable duct (1).

4. Duct according to claim 3 **characterized in that** the gripping means (11) are lateral wings (19) having through holes (12) for blocking the carriageable duct (1) to the ground by means of fixing means (17).

5. Duct according to claim 3 **characterized in that** the gripping means (11) are teeth (20) fixed to the sides of base (9), are facing away from the cap (10), and are fit to constrain the carriageable duct (1) on the ground.

6. Duct according to any of the previous claims **characterized in that** the central portion (8) has inside at least one longitudinal reinforcing bulkhead (25) to avoid crushing the carriageable duct (1).

7. Duct according to any of the previous claims **characterized in that** at least one of the first portion (14) and the second portion (18) is disposed obliquely with respect to the longitudinal axis of the central portion (8).

8. Duct according to any of the previous claims **characterized in that** the end of the carriageable duct (1), near the first coupling means (4), has a hemisphere shape (15) and the remaining end, near the first locking means (5), has an acetabulum shape (16).

9. Duct according to any one of the claims from 1 to 7, **characterized in that** the ends of the carriageable duct (1), near the first coupling means (4) and in proximity to the first locking means (5), are shaped as a flange.

10. Duct according to any one of the preceding claims, **characterized in that** the central portion (8) has an external antislip surface (13) designed to prevent slipping during trampling thereof.

11. Duct according to any of the previous claims **characterized in that** at least the central portion (8) is made of steel or stainless steel or aluminium or of ferrous material internally coated with plastic material, for transporting food or not, or of plastic material resistant to crushing.

12. Duct according to any of the previous claims **characterized in that** the pipeline (2) consists of pipes (3) and at least one carriageable duct (1) for the passage of cables or of fluid or liquid or gaseous or powdery material.
